# EUROPÄISCHE PATENTANMELDUNG

(11) **EP 2 605 095 A1**
(43) Veröffentlichungstag der Anmeldung: **19.06.2013**
(21) Anmeldenummer: 11193437.8
(22) Anmeldetag: 14.12.2011
(51) Int. Cl.: G05B 19/042, G06F 21/00

(54) **Bearbeitungsmaschine mit Zugriffskontrolle über Rechnernetz**

(71) Anmelder: Siemens Aktiengesellschaft, 80333 München (DE)
(72) Erfinder: Hamm, Carsten, 91058 Erlangen (DE); Kaever, Michael, 91056 Erlangen (DE); Rosenberg, Jens Ansgar, 90459 Nürnberg (DE)

(57) **Zusammenfassung**

Eine eine Bearbeitungsmaschine (1) steuernde Steuereinrichtung (2) nimmt von außen Anfangsdaten (D) entgegen, die zumindest die Quelle der Anfangsdaten (D) identifizierende Identifikationsdaten umfassen. Die Steuereinrichtung (2) übermittelt die Identifikationsdaten über eine Anbindung (8) an ein Rechnernetz (12) an einen Rechner (14) eines Rechnerverbundes (13) und nimmt von dem Rechner (14) oder einem weiteren Rechner (14) des Rechnerverbundes (13) Freischaltdaten (D') entgegen. Sie ergreift in Abhängigkeit von den Freischaltdaten (D') weitere Aktionen.

## Beschreibung

Die vorliegende Erfindung betrifft ein Betriebsverfahren für eine von einer Steuereinrichtung gesteuerte Bearbeitungsmaschine, beispielsweise eine Werkzeugmaschine, eine Produktionsmaschine oder einen Industrieroboter.

Die vorliegende Erfindung betrifft weiterhin ein Systemprogramm, das Maschinencode umfasst, der von einer Steuereinrichtung einer Bearbeitungsmaschine unmittelbar abarbeitbar ist.

Die vorliegende Erfindung betrifft weiterhin eine Steuereinrichtung einer Bearbeitungsmaschine, die mit einem derartigen Systemprogramm programmiert ist.

Die vorliegende Erfindung betrifft weiterhin eine Bearbeitungsmaschine, die eine derartige Steuereinrichtung aufweist.

Derartige Betriebsverfahren, Steuereinrichtungen usw. sind allgemein bekannt.

Von der Planung eines herzustellenden Produkts bis zu dessen Herstellung durch eine Bearbeitungsmaschine werden Daten erzeugt und verändert. Es ist im Stand der Technik nicht oder nur unter Schwierigkeiten möglich, festzustellen, wer welche Änderungen eingebracht hat und welche Werkzeuge (Softwaretools) hierfür verwendet worden sind.

Es kann verschiedene Gründe geben, aus denen ein Anwender, ein Steuerungshersteller oder ein Maschinenhersteller sicherstellen möchte, dass der Weg dieser Daten nachverfolgbar ist oder dass diese Daten nur von bestimmten, entsprechend qualifizierten und autorisierten Personen und Softwarewerkzeugen, die beispielsweise bestimmten Qualitätsbedingungen entsprechen, modifiziert werden. Die Nachvollziehbarkeit von Änderungen wird durch die zunehmende Verbreitung von serviceorientierten Architekturen und Clouddiensten erschwert. Wird ein derartiger Dienst verwendet, so ist im Stand der Technik nicht sichergestellt, dass die Software, die den Dienst anbietet, von einem bestimmten Hersteller stammt oder einen bestimmten Qualitätsstandard erfüllt.

Im Stand der Technik hat der Anwender alle verwendeten Softwarewerkzeuge zur Erstellung und Bearbeitung von Produktdaten auf seinen eigenen Rechnern installiert. Die Hersteller der Softwarewerkzeuge sind bekannt. Sie bescheinigen in der Regel das Qualitätsmanagementsystem bzw. die Erfüllung von für das Produkt wichtigen Richtlinien durch entsprechende Zertifikate in Papier. Die konkreten Eigenschaften ihrer Produkte bzw. deren Qualität wird nur in Bezug auf die in den jeweiligen Richtlinien definierten Eigenschaften anhand von Prüfzertifikaten oder -berichten nachvollziehbar.

Weiterhin ist bei Steuerungseinrichtungen auch die Identifikation von Benutzern von Bedeutung. Dabei unterscheiden sich die Anforderungen an die Benutzerauthentifikation bei Automatisierungsgeräten in einigen Aspekten von denen bei PCs. Beispielsweise werden Automatisierungsgeräte in der Regel anders administriert als PCs. Oftmals erfolgt sogar überhaupt keine zentrale Administration. Eine weitere Besonderheit bei Automatisierungsgeräten ist auch der Servicefall. Der Servicetechniker, der von einer externen Firma kommen kann, beispielsweise vom Hersteller der Bearbeitungsmaschine, muss auf das Automatisierungsgerät (die Steuereinrichtung) mit administrativen Rechten zugreifen können. Da im Servicefall in der Regel Eile geboten ist, um den Maschinenstillstand möglichst schnell zu beenden, sind hier alle Verzögerungen nach Möglichkeit zu vermeiden. Aus diesem Grund wird im Stand der Technik auf die Benutzeridentifikation bei Steuereinrichtungen entweder völlig verzichtet oder aber es werden gemeinsame Logins/Pass¬wörter beispielsweise für Servicepersonal eingerichtet. Derartige Logins und Passwörter bleiben auf lange Zeit unverändert. Es besteht daher insbesondere auch die Gefahr, dass ein ehemaliger, nicht mehr bei dem Hersteller der Bearbeitungsmaschine beschäftigter Angestellter unbefugtermaßen auf das Automatisierungsgerät zugreift.

Im Rahmen der Benutzeridentifikation - sofern eine solche vorhanden ist - nimmt die Steuereinrichtung von außen (nämlich über eine Benutzerschnittstelle) Anfangsdaten entgegen. Die Anfangsdaten umfassen die Quelle der Anfangsdaten identifizierende Identifikationsdaten, nämlich den Benutzernamen und das zugehörige Passwort. Die Steuereinrichtung prüft intern, ob der Benutzername und das Passwort ordnungsgemäß sind. Je nach Ergebnis der Prüfung lässt die Steuereinrichtung den Zugriff auf interne Daten der Steuereinrichtung zu oder nicht.

Die Aufgabe der vorliegenden Erfindung besteht darin, Möglichkeiten zu schaffen, mittels derer ein flexibler und komfortabler und insbesondere zuverlässiger Betrieb der Bearbeitungsmaschine gewährleistet ist.

Die Aufgabe wird durch ein Betriebsverfahren mit den Merkmalen des Anspruchs 1 gelöst. Vorteilhafte Ausgestaltungen des erfindungsgemäßen Betriebsverfahrens sind Gegenstand der abhängigen Ansprüche 2 bis 10.

Erfindungsgemäß ist vorgesehen,
- dass die Steuereinrichtung von außen Anfangsdaten entgegen nimmt,
- dass die Anfangsdaten zumindest die Quelle der Anfangsdaten identifizierende Identifikationsdaten umfassen,
- dass die Steuereinrichtung die Identifikationsdaten über eine Anbindung an ein Rechnernetz an einen Rechner eines Rechnerverbundes übermittelt,
- dass die Steuereinrichtung von dem Rechner oder einem weiteren Rechner des Rechnerverbundes Freischaltdaten entgegen nimmt und
- dass die Steuereinrichtung in Abhängigkeit von den Freischaltdaten weitere Aktionen ergreift.

Beispielsweise ist es möglich, dass die Anfangsdaten zusätzlich zu den Identifikationsdaten ein Nutzprogramm zum Steuern der Bearbeitungsmaschine umfassen, dass die Steuereinrichtung prüft, ob die Freischaltdaten eine Ausführung des Nutzprogramms zulassen, und dass die Steuereinrichtung je nach Ergebnis der Prüfung die Bearbeitungsmaschine entsprechend dem Nutzprogramm steuert oder die Ausführung des Nutzprogramms verweigert.

Insbesondere ist es möglich, dass die Freischaltdaten die Ausführung des Nutzprogramms beschränkende Beschränkungsdaten umfassen und dass die Steuereinrichtung in dem Fall, dass die Freischaltdaten eine Ausführung des Nutzprogramms zulassen, die Bearbeitungsmaschine nur entsprechend den Beschränkungsdaten steuert. Die Beschränkungsdaten können beispielsweise den Zeitraum spezifizieren, während dessen das Nutzprogramm ausgeführt werden darf. Alternativ oder zusätzlich ist es beispielsweise möglich, dass beschränkt wird, wie oft das Nutzprogramm abgearbeitet werden darf.

Alternativ oder zusätzlich ist es möglich, dass die Identifikationsdaten eine Benutzeridentifikation eines Benutzers und ein zugehöriges Passwort umfassen, dass die Steuereinrichtung prüft, ob die Freischaltdaten einen Zugriff auf interne Daten der Steuereinrichtung zulassen, und dass die Steuereinrichtung je nach Ergebnis der Prüfung den Zugriff auf die internen Daten der Steuereinrichtung durch den Benutzer zulässt oder verweigert. Durch diese Vorgehensweise ist insbesondere auf einfache Weise eine dynamische Verwaltung von Zugangsberechtigungen zur Steuerungseinrichtung realisierbar.

In der Regel nimmt die Steuereinrichtung die Identifikationsdaten vom Benutzer über eine der Steuereinrichtung zugeordnete Eingabeeinrichtung entgegen.

Analog zur Beschränkung bei der Abarbeitung des Nutzprogramms ist es möglich, dass die Freischaltdaten den Zugriff auf die internen Daten beschränkende Beschränkungsdaten umfassen und dass die Steuereinrichtung in dem Fall, dass die Freischaltdaten den Zugriff auf die internen Daten zulassen, den Zu¬griff auf die internen Daten entsprechend den Beschränkungsdaten beschränkt.

Beispielsweise ist es möglich, dass die Steuereinrichtung vom Benutzer einen Programmladebefehl entgegen nimmt, dass die Steuereinrichtung prüft, ob die Beschränkungsdaten eine Programmladeberechtigung umfassen, und dass die Steuereinrichtung je nach Ergebnis der Prüfung ein durch den Programmladebefehl spezifiziertes Nutzprogramm zum Steuern der Bearbeitungsmaschine entgegen nimmt und intern speichert oder nicht.

Es ist möglich, das Nutzprogramm der Steuereinrichtung über eine lokal mit der Steuereinrichtung verbundene Speichereinrichtung zuzuführen, beispielsweise einen USB-Memorystick. Vorzugsweise ist jedoch vorgesehen, dass die Steuereinrichtung das Nutzprogramm aufgrund des Programmladebefehls über die Anbindung an das Rechnernetz von dem Rechner, von dem weiteren Rechner oder einem dritten Rechner des Rechnerverbundes entgegen nimmt.

Das erfindungsgemäße Betriebsverfahren arbeitet noch besser, wenn die Steuereinrichtung zusammen mit den Identifikationsdaten eine die Steuereinrichtung eindeutig identifizierende Steuereinrichtungsidentifikation und/oder eine die Bearbeitungsmaschine eindeutig identifizierende Bearbeitungsmaschinenidentifikation über die Anbindung an das Rechnernetz an den Rechner des Rechnerverbundes übermittelt. Die Steuereinrichtungsidentifikation und/oder die Bearbeitungsmaschinenidentifikation können insbesondere einen Sicherheitscode umfassen.

Die Aufgabe wird weiterhin durch ein Systemprogramm gemäß Anspruch 11 gelöst. Erfindungsgemäß ist das Systemprogramm derart ausgebildet, dass die Abarbeitung des Maschinencodes durch die Steuereinrichtung bewirkt, dass die Steuereinrichtung ein erfindungsgemäßes Betriebsverfahren ausführt.

Die Aufgabe wird weiterhin durch eine Steuereinrichtung einer Bearbeitungsmaschine gelöst, die mit einem erfindungsgemäßen Systemprogramm programmiert ist.

Die Aufgabe wird weiterhin durch eine Bearbeitungsmaschine gelöst, die eine erfindungsgemäße Steuereinrichtung aufweist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung
- FIG 1: eine Bearbeitungsmaschine und ein Rechnernetz,
- FIG 2 bis 6: Ablaufdiagramme und
- FIG 7: einen möglichen Aufbau einer Identifikation.

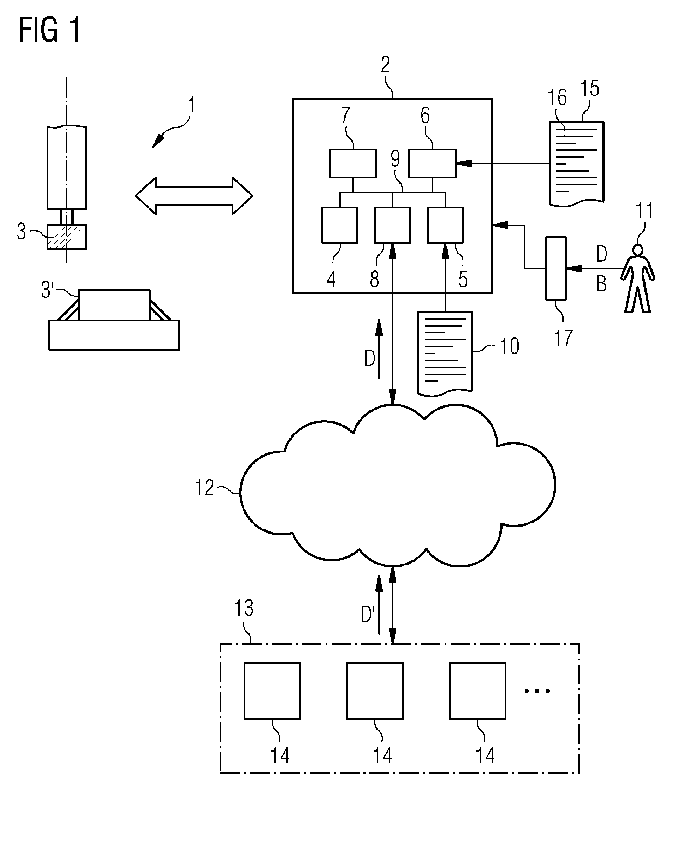

Gemäß FIG 1 wird eine Bearbeitungsmaschine 1 von einer Steuereinrichtung 2 gesteuert. Die Bearbeitungsmaschine 1 kann prinzipiell als beliebige Bearbeitungsmaschine ausgebildet sein, beispielsweise als Verpackungsmaschine, als Abfüllanlage oder als Presse. Gemäß FIG 1 ist die Bearbeitungsmaschine 1 als Werkzeugmaschine ausgebildet. Dies ist in FIG 1 durch einen stilisiert dargestellten Fräskopf 3 zur Bearbeitung eines Werkstücks 3' angedeutet. Alternativ kann die Bearbeitungsmaschine 1 beispielsweise als Produktionsmaschine oder als Industrieroboter ausgebildet sein.

Die Steuereinrichtung 2 ist als softwareprogrammierbare Steuereinrichtung ausgebildet. Sie kann beispielsweise einen Datenspeicher 4, einen Programmspeicher 5, einen Systemspeicher 6, einen Prozessor 7 und eine Anbindungseinrichtung 8 aufweisen. Die genannten Komponenten 4 bis 8 können über einen Bus 9 miteinander verbunden sein, so dass sie miteinander kommunizieren können.

Im Programmspeicher 5 ist ein Nutzprogramm 10 zur Steuerung der Bearbeitungsmaschine 1 hinterlegt. Das Nutzprogramm 10 kann von einem Benutzer 11 der Bearbeitungsmaschine 1 geändert werden. Im Datenspeicher 4 sind Daten hinterlegt. Es kann sich bei den Daten um Daten handeln, die im Rahmen der Abarbeitung des Nutzprogramms 10 ermittelt bzw. von der Bearbeitungsmaschine 1 entgegen genommen werden. Über die Anbindungseinrichtung 8 ist die Steuereinrichtung 2 an ein Rechnernetz 12 angebunden, beispielsweise ein LAN oder das WWW. An das Rechnernetz 12 ist unter anderem auch ein Rechnerverbund 13 angebunden. Der Rechnerverbund 13 weist mindestens einen Rechner 14 auf. In der Regel sind mehrere Rechner 14 vorhanden.

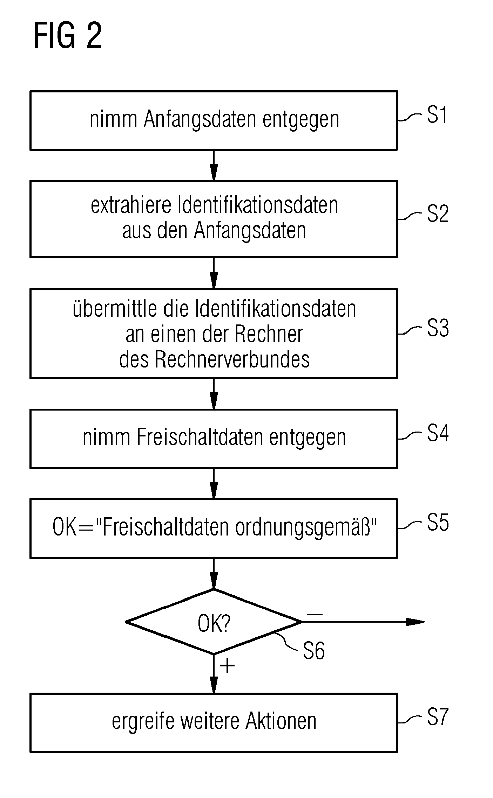

Im Systemspeicher 6 ist ein Systemprogramm 15 hinterlegt, mit dem die Steuereinrichtung 2 programmiert ist. Das Systemprogramm 15 umfasst Maschinencode 16, der von der Steuereinrichtung 2 - genauer: dem Prozessor 7 der Steuereinrichtung 2 - unmittelbar abarbeitbar ist. Die Abarbeitung des Maschinencodes 16 durch die Steuereinrichtung 2 (bzw. den Prozessor 7 der Steuereinrichtung 2) bewirkt, dass die Steuereinrichtung 2 die Bearbeitungsmaschine 1 gemäß einem Betriebsverfahren betreibt, das nachstehend in Verbindung mit FIG 2 näher erläutert wird.

Gemäß FIG 2 nimmt die Steuereinrichtung 2 in einem Schritt S1 Anfangsdaten D entgegen. Die Anfangsdaten D werden der Steuereinrichtung 2 von außen vorgegeben, d. h. nicht von der Bearbeitungsmaschine 1. Beispielsweise können die Anfangsdaten D der Steuereinrichtung 2 vom Benutzer 11 über eine entsprechende Eingabeeinrichtung 17 direkt vorgegeben werden. Die Eingabeeinrichtung 17 ist der Steuereinrichtung 2 zugeordnet, meist in Form einer kombinierten Ein-/Ausgabeeinrichtung (HMI). Alternativ können die Anfangsdaten D der Steuereinrichtung 2 über das Rechnernetz 12 und die Anbindungseinrichtung 8 von einem der Rechner 14 des Rechnerverbundes 13 vorgegeben werden.

Die Anfangsdaten D umfassen zumindest Identifikationsdaten. Die Identifikationsdaten identifizieren die Quelle, von der die Anfangsdaten D stammen, beispielsweise den entsprechenden Rechner 14 des Rechnerverbundes 13 oder den Benutzer 11. Die Steuereinrichtung 2 extrahiert - soweit erforderlich - in einem Schritt S2 die Identifikationsdaten aus den Anfangsdaten D. Sodann übermittelt sie die Identifikationsdaten in einem Schritt S3 über die Anbindungseinrichtung 8 und das Rechnernetz 12 an einen der Rechner 14 des Rechnerverbundes 13. Der Steuereinrichtung 2 muss hierbei nicht die physikalische Adresse des Rechners 14 selbst bekannt sein. Es reicht aus, wenn die Steuereinrichtung 2 den Rechner 14 logisch oder virtuell identifizieren kann, beispielsweise über eine URL.

Auf Seiten des Rechnerverbundes 13 werden die Identifikationsdaten geprüft. Entsprechend der Prüfung werden Freischaltdaten D' ermittelt und über das Rechnernetz 12 und die Anbindungseinrichtung 8 an die Steuereinrichtung 2 übermittelt. Die Steuereinrichtung 2 nimmt die Freischaltdaten D' in einem Schritt S4 entgegen.

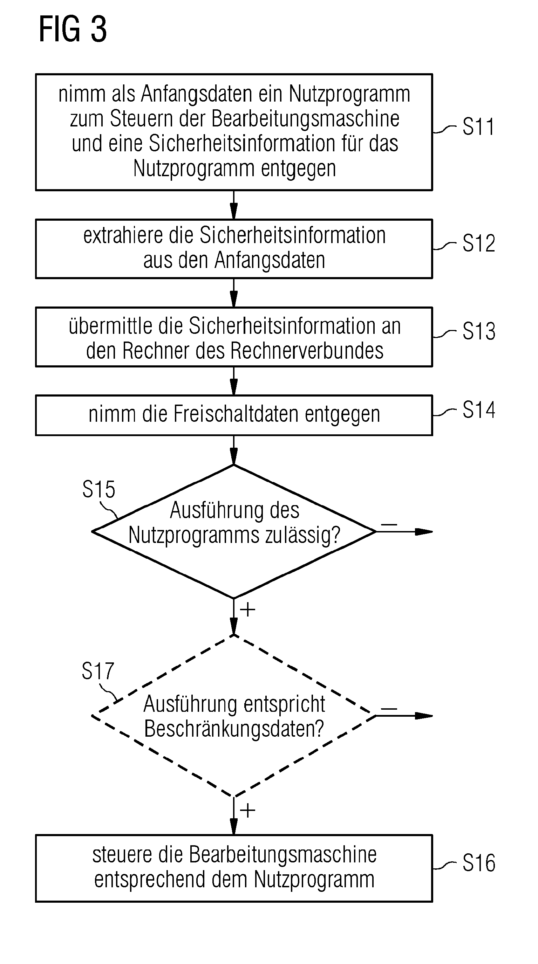

Die Identifikationsdaten sollen - sofern sie ordnungsgemäß sind - weitere Aktionen ermöglichen. Die Steuereinrichtung 2 prüft daher in Schritten S5 und S6 in Verbindung mit einer logischen Variable OK, ob die Freischaltdaten D' ordnungsgemäß sind. Je nach Ergebnis der Prüfung werden in einem Schritt S7 die weiteren Aktionen ergriffen oder nicht. Welche weiteren Aktionen ergriffen werden, hängt von weiteren Daten ab, die der Steuereinrichtung 2 vor, zusammen mit oder nach den Anfangsdaten D vorgegeben werden können. Dies wird in Verbindung mit den weitergehenden Ausgestaltungen der FIG 3 bis 5 ersichtlich werden.

FIG 3 zeigt eine mögliche Ausgestaltung des Betriebsverfahrens von FIG 2.

Gemäß FIG 3 nimmt die Steuereinrichtung 2 in einem Schritt S11 als Anfangsdaten D ein Nutzprogramm 10 zum Steuern der Bearbeitungsmaschine 1 und eine Sicherheitsinformation für das Nutzprogramm 10 entgegen. Die Sicherheitsinformation kann beispielsweise eine elektronische Signatur oder ein elektronisches Prüfsignal sein. Die Sicherheitsinformation kann beispielsweise gewährleisten, dass das Nutzprogramm 10 mittels eines zertifizierten Programmierwerkzeugs und/oder von einem zertifizierten Programmanbieter erstellt wurde. In einem Schritt S12 extrahiert die Steuereinrichtung 2 die Sicherheitsinformation aus den Anfangsdaten D. In einem Schritt S13 übermittelt die Steuereinrichtung 2 die Sicherheitsinformation an den entsprechenden Rechner 14 des Rechnerverbundes 13. Die Schritte S11 bis S13 von FIG 3 entsprechen somit einer konkreten Ausgestaltung der Schritte S1 bis S3 von FIG 2.

In einem Schritt S14 nimmt die Steuereinrichtung 2 - analog zum Schritt S4 von FIG 2 - von dem betreffenden Rechner 14 oder einem weiteren Rechner 14 des Rechnerverbundes 13 die Freischaltdaten D' entgegen.

Die Freischaltdaten D' umfassen stets einen Grundcode. Der Grundcode legt fest, ob die Ausführung des Nutzprogramms 10 prinzipiell zulässig ist oder nicht. In einem Schritt S15 prüft die Steuereinrichtung 2 daher unter Verwendung des Grundcodes, ob die Ausführung des Nutzprogramms 10 prinzipiell zulässig ist. Falls dies nicht der Fall ist, verweigert die Steuereinrichtung 2 die Ausführung des Nutzprogramms 10. Anderenfalls kann direkt zu einem Schritt S16 übergegangen werden, in dem die Steuereinrichtung 2 die Bearbeitungsmaschine 1 entsprechend dem Nutzprogramm 10 steuert. Die Schritte S14 bis S16 von FIG 3 entsprechen somit den Schritten S4 bis S7 von FIG 2.

Die Freischaltdaten D' können bei der Ausgestaltung gemäß FIG 3 - zusätzlich zum Grundcode - Beschränkungsdaten enthalten. Dies ist jedoch nur optional. Falls die Beschränkungsdaten vorhanden sind, beschränken sie die - prinzipiell zulässige - Ausführung des Nutzprogramms 10. Beispielsweise können die Beschränkungsdaten einen Zeitpunkt definieren, bis zu dem das Nutzprogramm 10 ausgeführt werden darf. Alternativ oder zusätzlich können die Beschränkungsdaten beispielsweise festlegen, wie oft das Nutzprogramm 10 abgearbeitet werden darf. Auch andere Beschränkungen sind möglich.

Falls die Beschränkungsdaten vorhanden sind, ist ein Schritt S17 vorhanden, der zwischen den Schritten S15 und S16 angeordnet ist. Im Schritt S17 prüft die Steuereinrichtung 2, ob die Ausführung des Nutzprogramms 10 den Beschränkungsdaten entspricht. Falls dies nicht der Fall ist, verweigert die Steuereinrichtung 2 die Ausführung des Nutzprogramms 10.

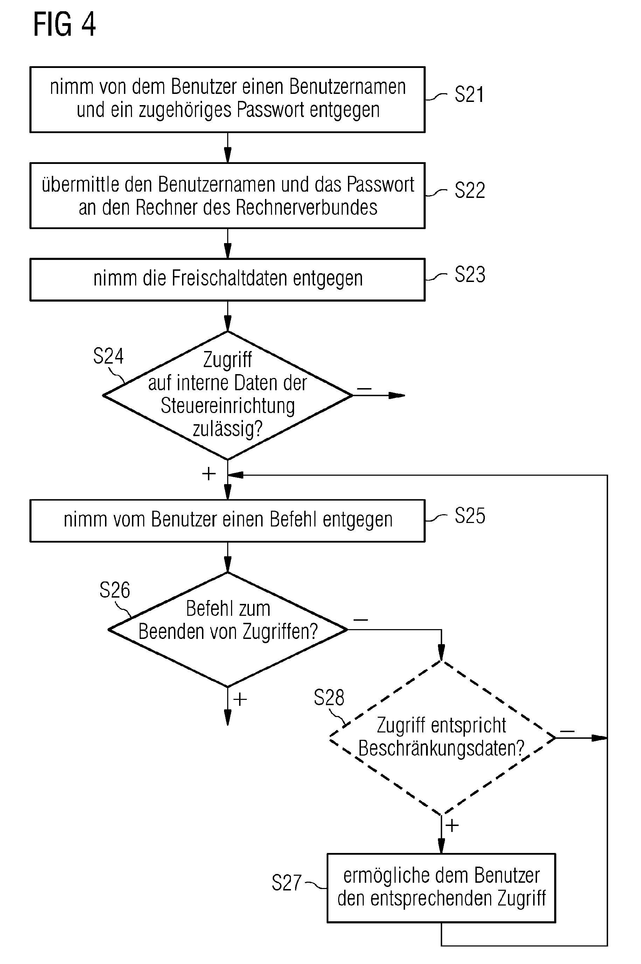

FIG 4 zeigt eine weitere mögliche Ausgestaltung des Prinzips von FIG 2.

Gemäß FIG 4 nimmt die Steuereinrichtung 2 in einem Schritt S21 von dem Benutzer 11 einen Benutzernamen und ein zugehöriges Passwort entgegen. Die entsprechenden Vorgaben können beispielsweise über die Eingabeeinrichtung 17 erfolgen. Auch eine automatisierte Vorgabe - beispielsweise durch Verbinden eines geeigneten Speichers mit der Steuereinrichtung 2 - ist möglich.

Die eingegebenen Daten entsprechen den Anfangsdaten D und auch den Identifikationsdaten. In einem Schritt S22 übermittelt die Steuereinrichtung 2 daher den Benutzernamen und das Passwort an den entsprechenden Rechner 14 des Rechnerverbundes 13. In einem Schritt S23 nimmt die Steuereinrichtung 2 die Freischaltdaten D' entgegen. Die Schritte S21 bis S23 von FIG 4 entsprechen somit den Schritten S1, S3 und S4 von FIG 2. Für den Schritt S2 von FIG 2 muss kein Pendant vorhanden sein.

In einem Schritt S24 prüft die Steuereinrichtung 2, ob die übermittelten Freischaltdaten D' einen Zugriff auf interne Daten der Steuereinrichtung 2 zulassen, insbesondere auf den Programmspeicher 5 und/oder den Datenspeicher 4. Wenn dies nicht der Fall ist, ist die Vorgehensweise von FIG 4 beendet. Der Zugriff wird also verweigert.

Anderenfalls nimmt die Steuereinrichtung 2 in einem Schritt S25 vom Benutzer 11 einen Befehl B entgegen. In einem Schritt S26 prüft die Steuereinrichtung 2, ob der vorgegebene Befehl B ein Befehl zum Zugreifen auf die internen Daten der Steuereinrichtung 2 oder ein Befehl zum Beenden von Zugriffen auf die internen Daten der Steuereinrichtung 2 (Logout) war. Wenn der Befehl B ein Befehl zum Beenden der Zugriffe war, ist die Vorgehensweise von FIG 4 ebenfalls beendet. Anderenfalls ermöglicht die Steuereinrichtung 2 dem Benutzer 11 in einem Schritt S27 den entsprechenden Zugriff. Sodann geht sie zum Schritt S25 zurück.

Die Freischaltdaten D' des Schrittes S23 können - analog zum Schritt S14 von FIG 3 - Beschränkungsdaten umfassen, welche den Zugriff auf die internen Daten der Steuereinrichtung 2 beschränken. Beispielsweise ist es möglich, dass nur ein Lesen von Daten, nur ein Schreiben von Daten oder sowohl ein Lesen als auch ein Schreiben von Daten möglich ist. Weiterhin ist es möglich, den Zugriff nur auf den Datenspeicher 4, nur auf den Programmspeicher 5 oder sowohl auf den Datenspeicher 4 als auch den Programmspeicher 5 zu erlauben. Auch andere Einschränkungen sind nach Bedarf realisierbar.

Wenn die Freischaltdaten D' entsprechende Beschränkungsdaten umfassen, ist zusätzlich ein Schritt S28 vorhanden, der zwischen den Schritten S26 und S27 angeordnet ist. Im Schritt S28 prüft die Steuereinrichtung 2, ob der im Schritt S25 angeforderte Zugriff den Beschränkungen gemäß den Beschränkungsdaten entspricht. Je nachdem, ob dies der Fall ist oder nicht, wird der Schritt S27 ausgeführt oder nicht.

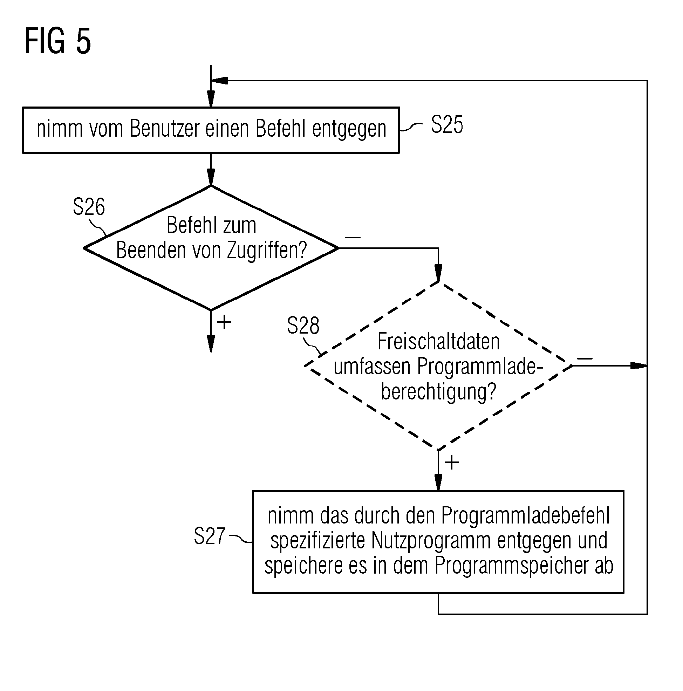

Die Vorgehensweise von FIG 4 wird nachfolgend in Verbindung mit FIG 5 in einer speziellen Ausgestaltung der Beschränkung nochmals erläutert.

Im Rahmen von FIG 5 ist angenommen, dass die im Schritt S23 entgegen genommenen Freischaltdaten D' eine Programmladeberechtigung umfassen können, d. h. dem Benutzer 11 das Recht einräumen können, auf den Programmspeicher 5 schreibend zuzugreifen. Weiterhin ist angenommen, dass der Benutzer 11 im Schritt S25 einen entsprechenden Programmladebefehl vorgegeben hat.

In diesem Fall prüft die Steuereinrichtung 2 gemäß FIG 5 im Schritt S28, ob die Freischaltdaten D' die entsprechende Ladeberechtigung umfassen. Wenn dies der Fall ist - und nur dann -, nimmt die Steuereinrichtung 2 im Schritt S27 das durch den Programmladebefehl spezifizierte Nutzprogramm 10 entgegen und speichert es in dem Programmspeicher 5 ab. Gegebenenfalls kann zuvor entsprechend der in Verbindung mit FIG 3 erläuterten Vorgehensweise das Nutzprogramm 10 anhand von Identifikationsdaten überprüft werden, die dem Nutzprogramm 10 zugeordnet sind.

Das Nutzprogramm 10 kann prinzipiell von einer beliebigen Quelle zur Verfügung gestellt werden. Insbesondere ist es gemäß den FIG 1 und 5 möglich, dass die Steuereinrichtung 2 das Nutzprogramm 10 aufgrund des Programmladebefehls über die Anbindungseinrichtung 8 und das Rechnernetz 12 von einem der Rechner 14 des Rechnerverbundes 13 entgegen nimmt, beispielsweise von dort abruft.

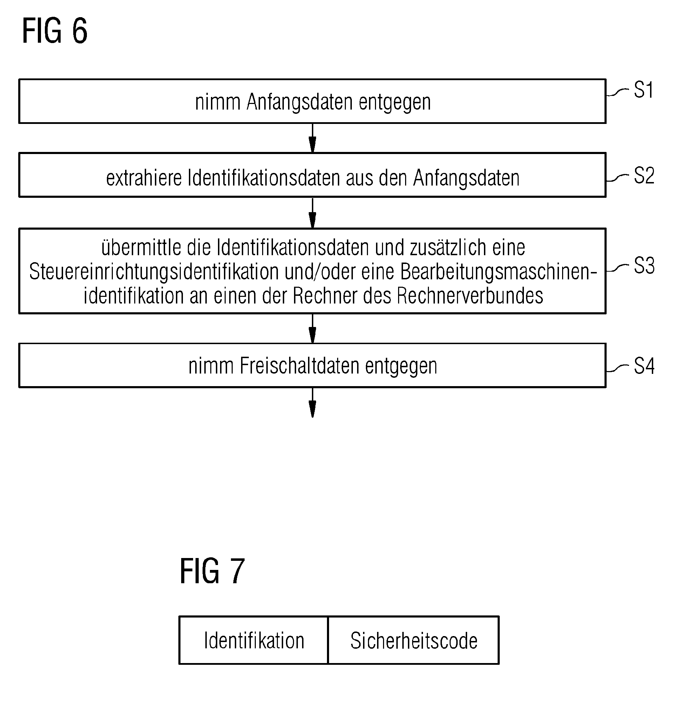

Es ist möglich, die obenstehend beschriebenen Vorgehensweisen so auszuführen, wie sie sind. Vorzugsweise übermittelt die Steuereinrichtung 2 jedoch gemäß FIG 6 zusammen mit den Identifikationsdaten eine Steuereinrichtungsidentifikation und/ oder eine Bearbeitungsmaschinenidentifikation an den entsprechenden Rechner 14 des Rechnerverbundes 13. Die Steuereinrichtungsidentifikation identifiziert die Steuereinrichtung 2 eindeutig. Sie wird also - auch bei mehreren baugleichen Steuereinrichtungen 2 - individuell nur für die jeweilige Steuereinrichtung 2 vergeben. Analoges gilt für die Bearbeitungsmaschinenidentifikation. Die entsprechenden Identifikationen können auf Seiten des Rechnerverbundes 13 bei der Ermittlung des Freischaltcodes D' berücksichtigt werden.

Die jeweilige Identifikation kann - siehe FIG 7 - einen geeigneten Sicherheitscode umfassen, beispielsweise ein elektronisches Prüfsiegel oder eine elektronische Signatur.

Die vorliegende Erfindung weist viele Vorteile auf. Insbesondere sind Zugriffsrechte auf die Steuereinrichtung 2 auf einfache und sichere Weise dynamisch und zentral im Rechnerverbund 13 verwaltbar. Es sind keine speziellen Kommunikationsmechanismen erforderlich. Es reicht die Kommunikation gemäß üblicher sicherer Kommunikationsregel aus. Derartige Kommunikationsregeln sind beispielsweise bei Onlinebanking weit verbreitet und auch als https-Protokoll bekannt. Benutzer 11 dürfen nur die Aktionen ausführen, zu denen sie berechtigt sind. Manipulationen an Nutzprogrammen 10 können nahezu ausgeschlossen werden. Vertrauliche Daten sind nur autorisierten Benutzern 11 zugänglich. Aktionen können authentisiert, protokolliert und nachvollziehbar ausgestaltet werden.

Obenstehend wurde nur der Betrieb der Steuereinrichtung 2 detailliert erläutert. Die auf Seiten des Rechnerverbundes 13 erforderlichen Maßnahmen wurden nicht näher erläutert. Sie müssen jedoch realisiert sein. Beispielsweise muss auf Seiten des Rechnerverbundes 13 die entsprechende Zuordnung der Sicherheitsinformation zum Nutzprogramm 10 gewährleistet sein. Dies ist jedoch nicht Gegenstand der vorliegenden Erfindung, sondern Voraussetzung für die vorliegende Erfindung.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine von einer Steuereinrichtung (2) gesteuerte Bearbeitungsmaschine (1),
- wobei die Steuereinrichtung (2) von außen Anfangsdaten (D) entgegen nimmt,
- wobei die Anfangsdaten (D) zumindest die Quelle der Anfangsdaten (D) identifizierende Identifikationsdaten umfassen,
- wobei die Steuereinrichtung (2) die Identifikationsdaten über eine Anbindung (8) an ein Rechnernetz (12) an einen Rechner (14) eines Rechnerverbundes (13) übermittelt,
- wobei die Steuereinrichtung (2) von dem Rechner (14) oder einem weiteren Rechner (14) des Rechnerverbundes (13) Freischaltdaten (D') entgegen nimmt,
- wobei die Steuereinrichtung (2) in Abhängigkeit von den Freischaltdaten (D') weitere Aktionen ergreift.

2. Betriebsverfahren nach Anspruch 1,
**dadurch gekennzeichnet, dass** die Anfangsdaten (D) zusätzlich zu den Identifikationsdaten ein Nutzprogramm (10) zum Steuern der Bearbeitungsmaschine (1) umfassen, dass die Steuereinrichtung (2) prüft, ob die Freischaltdaten (D') eine Ausführung des Nutzprogramms (10) zulassen, und dass die Steuereinrichtung (2) je nach Ergebnis der Prüfung die Bearbeitungsmaschine (1) entsprechend dem Nutzprogramm (10) steuert oder die Ausführung des Nutzprogramms (10) verweigert.

3. Betriebsverfahren nach Anspruch 2,
**dadurch gekennzeichnet, dass** die Freischaltdaten (D') die Ausführung des Nutzprogramms (10) beschränkende Beschränkungsdaten umfassen und dass die Steuereinrichtung (2) in dem Fall, dass die Freischaltdaten (D') eine Ausführung des Nutzprogramms (10) zulassen, die Bearbeitungsmaschine (1) nur entsprechend den Beschränkungsdaten steuert.

4. Betriebsverfahren nach Anspruch 1, 2 oder 3,
**dadurch gekennzeichnet, dass** die Identifikationsdaten eine Benutzeridentifikation eines Benutzers (11) und ein zugehöriges Passwort umfassen, dass die Steuereinrichtung (2) prüft, ob die Freischaltdaten (D') einen Zugriff auf interne Daten der Steuereinrichtung (2) zulassen, und dass die Steuereinrichtung (2) je nach Ergebnis der Prüfung den Zugriff auf die internen Daten der Steuereinrichtung (2) durch den Benutzer (11) zulässt oder verweigert.

5. Betriebsverfahren nach Anspruch 4,
**dadurch gekennzeichnet, dass** die Steuereinrichtung (2) die Identifikationsdaten vom Benutzer (11) über eine der Steuereinrichtung (2) zugeordnete Eingabeeinrichtung (17) entgegen nimmt.

6. Betriebsverfahren nach Anspruch 4 oder 5,
**dadurch gekennzeichnet, dass** die Freischaltdaten (D') den Zugriff auf die internen Daten beschränkende Beschränkungsdaten umfassen und dass die Steuereinrichtung (2) in dem Fall, dass die Freischaltdaten (D') den Zugriff auf die internen Daten zulassen, den Zugriff auf die internen Daten entsprechend den Beschränkungsdaten beschränkt.

7. Betriebsverfahren nach Anspruch 6,
**dadurch gekennzeichnet, dass** die Steuereinrichtung (2) vom Benutzer (11) einen Programmladebefehl entgegen nimmt, dass die Steuereinrichtung (2) prüft, ob die Beschränkungsdaten eine Programmladeberechtigung umfassen, und dass die Steuereinrichtung (2) je nach Ergebnis der Prüfung ein durch den Programmladebefehl spezifiziertes Nutzprogramm (10) zum Steuern der Bearbeitungsmaschine (1) entgegen nimmt und intern speichert oder nicht.

8. Betriebsverfahren nach Anspruch 7,
**dadurch gekennzeichnet, dass** die Steuereinrichtung (2) das Nutzprogramm (10) aufgrund des Programmladebefehls über die Anbindung (8) an das Rechnernetz (12) von dem Rechner (14), von dem weiteren Rechner (14) oder einem dritten Rechner (14) des Rechnerverbundes (13) entgegen nimmt.

9. Betriebsverfahren nach einem der obigen Ansprüche,
**dadurch gekennzeichnet, dass** die Steuereinrichtung (2) zusammen mit den Identifikationsdaten eine die Steuereinrichtung (2) eindeutig identifizierende Steuereinrichtungsidentifikation und/oder eine die Bearbeitungsmaschine (1) eindeutig identifizierende Bearbeitungsmaschinenidentifikation über die Anbindung (8) an das Rechnernetz (12) an den Rechner (14) des Rechnerverbundes (13) übermittelt.

10. Betriebsverfahren nach Anspruch 9,
**dadurch gekennzeichnet, dass** die Steuereinrichtungsidentifikation und/oder die Bearbeitungsmaschinenidentifikation einen Sicherheitscode umfassen.

11. Systemprogramm, das Maschinencode (16) umfasst, der von einer Steuereinrichtung (2) einer Bearbeitungsmaschine (1) unmittelbar abarbeitbar ist und dessen Abarbeitung durch die Steuereinrichtung (2) bewirkt, dass die Steuereinrichtung (2) ein Betriebsverfahren nach einem der obigen Ansprüche ausführt.

12. Steuereinrichtung für eine Bearbeitungsmaschine (1),
**dadurch gekennzeichnet, dass** die Steuereinrichtung mit einem Systemprogramm (15) nach Anspruch 11 programmiert ist.

13. Bearbeitungsmaschine,
**dadurch gekennzeichnet, dass** die Bearbeitungsmaschine eine Steuereinrichtung (2) nach Anspruch 12 aufweist.

14. Bearbeitungsmaschine nach Anspruch 13,
**dadurch gekennzeichnet, dass** die Bearbeitungsmaschine als Werkzeugmaschine, als Produktionsmaschine oder als Industrieroboter ausgebildet ist.

## Geänderte Patentansprüche

### Geänderte Patentansprüche gemäss Regel 137(2) EPÜ.

**1.** Betriebsverfahren für eine von einer Steuereinrichtung (2) gesteuerte Bearbeitungsmaschine (1),
- wobei die Steuereinrichtung (2) über eine der Steuereinrichtung (2) zugeordnete Eingabeeinrichtung (17) von einem Benutzer (11) der Bearbeitungsmaschine (1) direkt eine Benutzeridentifikation und ein zugehöriges Passwort entgegen nimmt,
- wobei die Steuereinrichtung (2) die Benutzeridentifikation und das Passwort über eine Anbindung (8) an ein Rechnernetz (12) an einen Rechner (14) eines Rechnerverbundes (13) übermittelt,
- wobei die Steuereinrichtung (2) von dem Rechner (14) oder einem weiteren Rechner (14) des Rechnerverbundes (13) nutzerbezogene Freischaltdaten (D') entgegen nimmt,
- wobei die Steuereinrichtung (2) prüft, ob die nutzerbezogenen Freischaltdaten (D') einen Zugriff auf interne Daten der Steuereinrichtung (2) zulassen, und
- wobei die Steuereinrichtung (2) je nach Ergebnis der Prüfung den Zugriff auf die internen Daten der Steuereinrichtung (2) durch den Benutzer (11) zulässt oder verweigert.

**2.** Betriebsverfahren nach Anspruch 1,
**dadurch gekennzeichnet, dass** die nutzerbezogenen Freischaltdaten (D') den Zugriff auf die internen Daten beschränkende nutzerbezogene Beschränkungsdaten umfassen und dass die Steuereinrichtung (2) in dem Fall, dass die nutzerbezogenen Freischaltdaten (D') den Zugriff auf die internen Daten zulassen, den Zugriff auf die internen Daten entsprechend den nutzerbezogenen Beschränkungsdaten beschränkt.

**3.** Betriebsverfahren nach Anspruch 2,
**dadurch gekennzeichnet, dass** die Steuereinrichtung (2) vom Benutzer (11) einen Programmladebefehl entgegen nimmt, dass die Steuereinrichtung (2) prüft, ob die nutzerbezogenen Beschränkungsdaten eine Programmladeberechtigung umfassen, und dass die Steuereinrichtung (2) je nach Ergebnis der Prüfung ein durch den Programmladebefehl spezifiziertes Nutzprogramm (10) zum Steuern der Bearbeitungsmaschine (1) entgegen nimmt und in einem Programmspeicher (5) der Steuereinrichtung (2) speichert oder nicht.

**4.** Betriebsverfahren nach Anspruch 3,
**dadurch gekennzeichnet, dass** die Steuereinrichtung (2) das Nutzprogramm (10) aufgrund des Programmladebefehls über die Anbindung (8) an das Rechnernetz (12) von dem Rechner (14), von dem weiteren Rechner (14) oder einem dritten Rechner (14) des Rechnerverbundes (13) entgegen nimmt.

**5.** Betriebsverfahren nach Anspruch 3 oder 4,
**dadurch gekennzeichnet,**
- **dass** die Steuereinrichtung (2) zusätzlich zum Nutzprogramm (10) eine Sicherheitsinformation für das Nutzprogramm (10) entgegen nimmt,
- **dass** die Steuereinrichtung (2) die Sicherheitsinformation über die Anbindung an das Rechnernetz (12) an einen Rechner (14) des Rechnerverbundes (13) übermittelt,
- **dass** die Steuereinrichtung von einem Rechner (14) des Rechnerverbunds (13) programmbezogene Freischaltdaten (D') entgegennimmt,
- **dass** die Steuereinrichtung (2) prüft, ob die programmbezogenen Freischaltdaten (D') eine Ausführung des Nutzprogramms (10) zulassen, und
- **dass** die Steuereinrichtung (2) je nach Ergebnis der Prüfung die Speicherung des Nutzprogramms (10) ausführt oder verweigert.

**6.** Betriebsverfahren nach Anspruch 5,
**dadurch gekennzeichnet, dass** die programmbezogenen Freischaltdaten (D') die Ausführung des Nutzprogramms (10) beschränkende programmbezogene Beschränkungsdaten umfassen und dass die Steuereinrichtung (2) in dem Fall, dass die programmbezogenen Freischaltdaten (D') eine Ausführung des Nutzprogramms (10) zulassen, die Bearbeitungsmaschine (1) nur entsprechend den programmbezogenen Beschränkungsdaten steuert.

**7.** Betriebsverfahren nach Anspruch 5 oder 6,
**dadurch gekennzeichnet, dass** die Steuereinrichtung (2) zusammen mit der Sicherheitsinformation eine die Steuereinrichtung (2) eindeutig identifizierende Steuereinrichtungsidentifikation und/oder eine die Bearbeitungsmaschine (1) eindeutig identifizierende Bearbeitungsmaschinenidentifikation über die Anbindung (8) an das Rechnernetz (12) an den Rechner (14) des Rechnerverbundes (13) übermittelt.

**8.** Betriebsverfahren nach einem der obigen Ansprüche,
**dadurch gekennzeichnet, dass** die Steuereinrichtung (2) zusammen mit der Benutzeridentifikation und dem Passwort eine die Steuereinrichtung (2) eindeutig identifizierende Steuereinrichtungsidentifikation und/oder eine die Bearbeitungsmaschine (1) eindeutig identifizierende Bearbeitungsmaschinenidentifikation über die Anbindung (8) an das Rechnernetz (12) an den Rechner (14) des Rechnerverbundes (13) übermittelt.

**9.** Betriebsverfahren nach Anspruch 7 oder 8,
**dadurch gekennzeichnet, dass** die Steuereinrichtungsidentifikation und/oder die Bearbeitungsmaschinenidentifikation einen Sicherheitscode umfassen.

**10.** Systemprogramm, das Maschinencode (16) umfasst, der von einer Steuereinrichtung (2) einer Bearbeitungsmaschine (1) unmittelbar abarbeitbar ist und dessen Abarbeitung durch die Steuereinrichtung (2) bewirkt, dass die Steuereinrichtung (2) ein Betriebsverfahren nach einem der obigen Ansprüche ausführt.

**11.** Steuereinrichtung für eine Bearbeitungsmaschine (1),
**dadurch gekennzeichnet, dass** die Steuereinrichtung mit einem Systemprogramm (15) nach Anspruch 11 programmiert ist.

**12.** Bearbeitungsmaschine,
**dadurch gekennzeichnet, dass** die Bearbeitungsmaschine eine Steuereinrichtung (2) nach Anspruch 11 aufweist.

**13.** Bearbeitungsmaschine nach Anspruch 12,
**dadurch gekennzeichnet, dass** die Bearbeitungsmaschine als Werkzeugmaschine, als Produktionsmaschine oder als Industrieroboter ausgebildet ist.
